# EUROPEAN PATENT APPLICATION

(11) **EP 4 607 780 A1**
(43) Date of publication of application: **27.08.2025**
(21) Application number: 25157685.6
(22) Date of filing: 13.02.2025
(51) Int. Cl.: H02M 1/34, H02M 3/335, H02M 1/00

(54) **DUAL-ACTIVE-BRIDGE POWER CONVERTER AND METHOD FOR OPERATING THEREOF**

(30) Priority: 21.02.2024 FI 20245212
(71) Applicant: Vensum Power Oy, 02150 Espoo (FI)
(72) Inventor: Baron-Trocellier, Natan, 74350 Cruseilles (FR)
(74) Representative: Moosedog Oy

(57) **Abstract**

Disclosed is a power converter (100) and a method (500) for operating thereof. The power converter comprises two or more switching devices (102A-H); a snubber circuit (104A-D) disposed in parallel to at least one of the two or more switching devices. The snubber circuit comprises a snubber capacitor (106A-D); and a snubber switch (108A-D) disposed in series to the snubber capacitor. The power converter further comprises a controller (110) configured to control switching of the snubber switch in each snubber circuit to minimize turn-off switching losses in the power converter while achieving Zero Voltage Switching (ZVS).

## Description

### TECHNICAL FIELD

The present disclosure relates to a power converter, in particular Dual-Active-Bridge (DAB) power converter. The present disclosure also relates to a method for operating a DAB power converter to minimize turn-off switching losses therein while achieving Zero Voltage Switching (ZVS).

### BACKGROUND

Power conversion is a key enabling technology behind some of the fastest growing green businesses, including solar power production, electric vehicle charging, and data center optimization. Power converters, such as Dual-Active-Bridge (DAB) converters, are employed in several fields of application, for example, energy storage systems, electric vehicles, smart grids, and the like, due to their advantageous features, such as galvanic isolation, bidirectional power flow, high power density, versatile voltage control, soft switching properties, and the like. The DAB power converters are often modelled to obtain improved performance and efficiency in a particular field of application. Moreover, the power converters are utilized for trajectory-based controls to respond spontaneously to control system disturbances and provide accurate control. The control trajectories guarantee soft-switching and high efficiency in the power converters. Thus, the development of techniques for modelling the power converters may be required when employing the power converters in several fields of application.

However, one of the main limitations in the DAB power converters is that, at high load currents, transistors switch under high current stress. Even though Zero Voltage Switching (ZVS) is achieved at all times, this leads to the existence of high dv/dt (rate of voltage change over time) during switching transients. This high dv/dt leads to three problems. Firstly, unless gate drivers are fast enough, it causes high turn-off commutation losses in the switching leg. Secondly, it may activate parasitic transistors inside of the transistor, causing a catastrophic failure. Thirdly, this high dv/dt leads to increased switching noise in the system, which needs to be filtered using EMI filters.

Conventionally, to reduce the dv/dt, a capacitor is often added in parallel with the transistors, in the power converter. The capacitor provides a path for the current to flow when the switch is turned off, thereby reducing turn-off switching losses. However, the presence of the capacitor can make it difficult to achieve ZVS, a technique used to reduce the turn-on commutation losses. ZVS involves turning on the switch when the voltage across it is zero, which reduces the losses due to the current and voltage transitions during turn-on. When the current in the power converter is low, achieving ZVS becomes even more challenging, leading to increased turn-on commutation losses.

Thus, achieving both low turn-off and turn-on losses in the power converter can be a difficult trade-off. Adding a capacitor in parallel with the transistors can help reduce turn-off losses but at the cost of increased turn-on commutation losses, especially when ZVS is required.

Therefore, in light of the foregoing discussion, there exists a need to overcome the aforementioned drawbacks associated with the conventional power converter.

### SUMMARY

The present disclosure seeks to provide a power converter. The present disclosure also seeks to provide a method for operating a power converter. An aim of the present disclosure is to provide a solution that overcomes at least partially the problems encountered in prior art.

In one aspect, an embodiment of the present disclosure provides a Dual-Active-Bridge (DAB) power converter comprising:
- two or more switching devices;
- a snubber circuit disposed in parallel to at least one of the two or more switching devices, the snubber circuit comprising:
   - a snubber capacitor; and
   - a snubber switch disposed in series to the snubber capacitor; and
- a controller configured to control switching of the snubber switch in each snubber circuit to minimize turn-off switching losses in the DAB power converter while achieving Zero Voltage Switching (ZVS).

In another aspect, an embodiment of the present disclosure provides a method for operating a Dual-Active-Bridge (DAB) power converter, the method comprising:
- disposing, in parallel, a snubber circuit to at least one of two or more switching devices of the DAB power converter, the snubber circuit comprising a snubber capacitor and a snubber switch disposed in series to the snubber capacitor; and
- controlling switching of the snubber switch in each snubber circuit to minimize turn-off switching losses in the power converter while achieving Zero Voltage Switching (ZVS).

Embodiments of the present disclosure substantially eliminate or at least partially address the aforementioned problems in the prior art, and enable reduced turn-off switching losses when current in the DAB power converter is high, to increase reliability and reduce turn-off commutation losses in a switching leg, while not reducing the capability of the DAB power converter to achieve ZVS. Beneficially, trade-off between minimizing turn-off switching losses and achieving ZVS, achieved using a snubber circuit, is critical for improving efficiency and reliability in high-frequency, high-power applications.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIG. 1 is an electric circuit diagram of a power converter, in accordance with an embodiment of the present disclosure;
FIG. 2 shows a graph representing relation between switching losses and current in a leg of the power converter, in accordance with an embodiment of the present disclosure;
FIG. 3 shows a graph representing controlled trajectory path in the power converter, in accordance with an embodiment of the present disclosure;
FIG. 4 shows a graph representing transistor switching states in the power converter, in accordance with an embodiment of the present disclosure; and
FIG. 5 illustrates a flowchart of a method listing steps for operating a power converter, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In one aspect, an embodiment of the present disclosure provides a Dual-Active-Bridge (DAB) power converter comprising:
- two or more switching devices;
- a snubber circuit disposed in parallel to at least one of the two or more switching devices, the snubber circuit comprising:
   - a snubber capacitor; and
   - a snubber switch disposed in series to the snubber capacitor; and
- a controller configured to control switching of the snubber switch in each snubber circuit to minimize turn-off switching losses in the DAB power converter while achieving Zero Voltage Switching (ZVS).

In another aspect, an embodiment of the present disclosure provides a method for operating a Dual-Active-Bridge (DAB) power converter, the method comprising:
- disposing, in parallel, a snubber circuit to at least one of two or more switching devices of the DAB power converter, the snubber circuit comprising a snubber capacitor and a snubber switch disposed in series to the snubber capacitor; and
- controlling switching of the snubber switch in each snubber circuit to minimize turn-off switching losses in the DAB power converter while achieving Zero Voltage Switching (ZVS).

The present disclosure provides the aforementioned DAB power converter and the aforementioned method for operating the DAB power converter. The DAB power converter and the method for operating the DAB power converter of the present disclosure are utilized to increase reliability and reduces turn-off switching losses in the power converter, without reducing the capability of the power converter to achieve ZVS. Herein, the snubber circuit is added to the power converter, to limit the rate of change of voltage or current and improve the overall performance and reliability of the power converter. The aforementioned power converter also helps to reduce electromagnetic interference (EMI) and noise generated therein. Additionally, the aforementioned power converter operates at higher switching frequencies, and switching losses of the switching devices therein are significantly reduced.

Throughout the present disclosure the term *"power converter"* refers to an electronic device that is configured to convert electrical energy from one voltage level, current level, or frequency to another. The power converters work by controlling the flow of electrical power from a source side to a load side. Optionally, the power converters also control circuits to ensure proper operation and protect the semiconductor devices and the load from overvoltage, overcurrent, and overheating. Beneficially, the power converters enable efficient and effective transfer of energy from one point to another.

In embodiments of the present disclosure, the power converter is a Dual-Active-Bridge (DAB) power converter. Specifically, as used herein, the DAB power converter is a type of DC-DC converter used to convert DC power from one voltage level to another, and consists of two bridges, each of which is comprised of two switching legs. The DAB power converter is employed as it has a high-power density and ability to achieve zero-voltage switching (ZVS) operation. Also, the DAB power converter has ability to operate at high frequencies and handle high voltages, making it suitable for a variety of applications. Further, the topology of the DAB power converter provides a natural path for implementing the snubber circuit in parallel with the switching devices, which is a feature of the present disclosure. The present disclosure is especially suited for the DAB power converter because there is no DC current therein, which eliminates the risk of snubber capacitors becoming indefinitely charged and leading to failure. Hereinafter, for purposes of the present disclosure, the term "power converter," or simply the term "converter," has been generally used to represent "DAB power converter"/"DC-DC converter," without any limitations.

The term *"switching device"* refers to an electronic component implemented in the power converter that is configured to turn on or off an electrical circuit or to switch the flow of electrical energy between different circuits. The switching devices are used to control the flow of electrical energy and to convert electrical energy between different voltage or current levels. In the power converter, the switching devices operate by controlling the flow of electrical current through the circuit. In particular, when the switching device is turned on, it allows current to flow through the corresponding circuit, and when it is turned off, it blocks the flow of current. Further, the switching devices has low on-resistance and fast switching speeds and provides higher breakdown voltage and lower switching losses. Advantageously, the switching devices enable efficient and precise control of electrical energy.

The term *"turn-off switching loss"* refers to the energy dissipated when a switching device turns off. Generally, the switching devices are MOSFETs (Metal-Oxide-Semiconductor Field-Effect Transistors). In a MOSFET, turn-off energy is the energy dissipated when the device is turned OFF. When the system is configured for Zero Voltage Switching (ZVS), all turn-off losses occur inside the transistor. Under ZVS configuration, there are two transistors in a switching leg, with one initially on and the other off. A switching transition starts when the opening FET is turned off, causing its resistance to increase until it cannot conduct anymore. This allows the inductors in the converter to drive the opening FET voltage up and the closing FET voltage down. Finally, once the closing FET voltage is 0V, it is turned on. Turn-off losses occur when the opening transistor takes too much time to turn off, causing part of the current to flow through the channel of the transistor and cause losses. This happens when voltage variations in the converter are faster than voltage variations in the gate of the opening FET. The more dv/dt in the converter, the more turn-off losses. In practice, dv/dt increases with the amount of current in the inductors. To mitigate this, capacitance can be added in parallel with the switching leg to slow down voltage variations.

The term *"zero Voltage Switching (ZVS)"* refers to a switching technique that can be used to minimize switching losses in power converters, particularly for high-frequency and high-power applications. In a typical switching cycle, turn-on losses occur when a MOSFET is turned ON while its voltage is >0V. Turn-on losses occur because MOSFETs have parasitic capacitance between their drain and their source. Just before the MOSFET is closed, it is equivalent to a capacitor with voltage between its plates. When the MOSFET is turned ON, its channel becomes able to conduct. Then, a very small resistor is added in parallel with the capacitor. In other words, the capacitor is short-circuited, and it will very quickly discharge in the resistor (i.e., the channel of the transistor) and create turn-on losses. This short-circuit process is very fast, so it induces very high dv/dt in the system. Zero Voltage Switching prevents the short-circuit from happening, so it negates turn-on losses and makes dv/dt much lower (because dv/dt is not created by a short-circuit anymore, instead it is created by the natural discharge of the parasitic capacitance by the inductance in the converter, which is much slower).

As per embodiments of the present disclosure, at least some of the switching devices in the present power converter has the snubber circuit disposed in parallel thereto. Herein, the snubber circuit includes a series connection of a capacitor (namely, snubber capacitor) and a transistor (namely, snubber switch). As per embodiments of the present disclosure, one snubber circuit is connected in parallel with each one of the two or more switching devices. Herein, the snubber circuits are being used to reduce the voltage stress on the switching devices of the power converter, to limit the rate of change of voltage or current, and to improve the overall performance and reliability of the power converter. In this regard, the snubber circuit is not static but dynamic snubber circuit, controlled by a snubber switch, which can be turned on or off based on the operating conditions. This dynamic control allows the DAB power converter to adapt to varying load currents and optimize performance. Moreover, the snubber circuit helps to reduce electromagnetic interference (EMI) and noise generated by the power converter, thus minimizing the need for additional filtering components. Therefore, by placing the snubber circuit in parallel to the switching devices, it helps to reduce the amplitude of the voltage spike by reducing the complex impedance of the parasitic LC circuit, which helps to protect the switching devices and improve the overall performance of the power converter.

The snubber switch, when implemented in the snubber circuit described above, as disposed in parallel to at least one of the two or more switching devices in the power converter, is used to turn the snubber circuit OFF or ON. When the snubber switch is ON, the snubber circuit is ON, and the capacitance of the snubber circuit is the one of the snubber capacitor, which is "large". When the snubber switch is OFF, the snubber circuit is OFF, and the capacitance of the snubber circuit is the one of the snubber switch, which is "small". Further, the snubber capacitor is connected in parallel to corresponding one of the two or more switching devices, and in series to the corresponding snubber switch, to reduce the voltage stress on each of the two or more switching devices, limit the rate of change of voltage or current, and improve the overall performance and reliability of the power converter.

Optionally, the snubber capacitor is a capacitor bank comprising two or more capacitor disposed in parallel to each other. In this regard, the snubber capacitor bank is typically made up of two or more individual capacitors that are connected in parallel to each other collectively forming the snubber capacitor. In particular, the capacitor bank enables in increasing the overall capacitance and thereby improving the ability of the snubber capacitor to slow down voltage transients. The capacitor bank may include, but not limited to, ceramic capacitors, film capacitors, power film capacitors, electrolytic capacitors, Mica capacitors, film capacitors, paper capacitors, and electrolytic capacitors. Optionally, the capacitors used in the capacitor bank are low inductance, high voltage capacitors with low ESR (Equivalent Series Resistance) values.

For purposes of selecting a snubber switch for use in a power converter, there are four key criteria to consider. Firstly, the voltage rating of the snubber switch must match that of the switching leg, with high voltage ratings required for MOSFET and IGBT devices, and lower voltage ratings suitable for GaN HEMT devices. Secondly, the power dissipation of the snubber switch needs to be considered, as the flow of current through the switch during snubber conduction can result in unwanted power losses. The amount of power loss is dependent on the specific device chosen. For example, IGBT devices have a fixed voltage drop, while MOSFET and HEMT devices have an ON-state resistance. Thirdly, the price of the snubber switch may also be taken into account. IGBT devices are generally cheaper but offer lower performance, while MOSFET and GaN HEMT devices can cost between 3 to 10 times more. Finally, the Miller capacitance of the snubber switch is a critical consideration. When the switched snubber is in an open state and the leg switches, this can create a dv/dt in the snubber switch. This dv/dt can result in a voltage spike in the gate of the switch, and the magnitude of the spike is dependent on the amount of Miller capacitance present. If the voltage spike is too large, it can turn on the snubber switch and cause it to fail.

Optionally, the snubber switch is one of: MOSFET, GaN HEMT, IGBT. In case of the snubber switch, MOSFET (Metal-Oxide-Semiconductor Field-Effect Transistor) offer fast switching speeds, low on-state resistance (RDS(on)) (i.e., "drain-source on resistance" or the total resistance between the drain and source in a MOSFET when the MOSFET is "on"), and low Miller capacitance, which helps reduce switching losses and allows for efficient operation in high-frequency applications. Also, GaN HEMT (Gallium Nitride High Electron Mobility Transistors) feature low on-state resistance, making them suitable for high-efficiency applications where minimal losses are critical. And, IGBT (Insulated-Gate Bipolar Transistors) combine the advantages of MOSFETs, such as voltage-controlled input, with bipolar junction transistors, such as high current-carrying capacity and low on-state voltage drop, making them ideal for high-power applications.

Further, optionally, the snubber capacitor is one of: ceramic capacitor, Mica capacitor, film capacitor. In case of the snubber capacitor, ceramic capacitors offer a compact size, low equivalent series resistance (ESR), and low equivalent series inductance (ESL), which enables them to handle high-frequency applications effectively, and thus makes them suitable for snubber circuits in power converters. Also, Mica capacitors provide excellent stability, low temperature coefficients, and low ESR, making them suitable for high-frequency applications; and further exhibit low dielectric absorption and long-term reliability, which is beneficial for snubber circuits in power converters. And, film capacitors offer low ESR, low ESL, and good temperature stability, and these characteristics make them well-suited for snubber circuits that need to handle high-frequency switching transients and maintain stable performance over time.

As used herein, the power converter is made of two bridges, namely H-bridge, connected to the source side of the power converter and a secondary H-bridge, connected to the load side of the power converter. In this regard, the two H-bridge circuits are used to control the magnitude of the power supplied in the power converter. Also, each of the two H-bridge circuits comprises two legs. Further, each of the two legs comprises two switching devices. So, typically, in this configuration, the power converter may have a total of eight switching devices. Advantageously, the use of snubber circuits in H-bridge circuits ensures optimal performance and reliability of the power converter.

In an embodiment, the power converter further comprises two H-bridge circuits, with each of the two H-bridge circuits comprising two legs, and with each of the two legs comprising two switching devices, wherein the snubber circuit is disposed in parallel to at least one of the two switching devices in each of the two legs of at least one of the two H-bridge circuits.

In this first configuration, the power converter features two H-bridge circuits, each with two legs containing two switching devices per leg. The snubber circuit is positioned parallel to at least one of the two switching devices in each leg of at least one H-bridge circuit. This first configuration offers the advantage of modularity and flexibility in design of the power converter, enabling efficient distribution of power and load management. By incorporating the snubber circuit, turn-off switching losses are effectively reduced, and Zero Voltage Switching (ZVS) is achieved across multiple H-bridge circuits, resulting in enhanced overall system efficiency, reliability, and performance.

In another embodiment, the snubber circuit is disposed in parallel to each one of the two switching devices in each of the two legs of at least one of the two H-bridge circuits. This second configuration involves the snubber circuit being parallel to each of the two switching devices in each of the two legs of at least one of the two H-bridge circuits. This configuration offers improved control and uniformity in managing switching losses across the H-bridge circuit. In this second configuration, the use of two snubber circuits per leg in the power converter can provide increased flexibility in terms of the possible capacitance levels in the switching leg. Without any snubber circuits, the capacitance of the switching leg remains constant. With one switched snubber circuit per leg, the leg has two possible capacitance levels: Level 1 with the snubber off, and Level 2 with the snubber on. However, by implementing two switched snubber circuits per leg, with one in parallel with each switch, the leg can have four possible capacitance levels: Level 1 with both snubber circuits off, Level 2 with snubber circuit 1 on and snubber circuit 2 off, Level 3 with snubber circuit 1 off and snubber circuit 2 on, and Level 4 with both snubber circuits on. This increased flexibility can provide improved performance and efficiency in the power converter, as the snubber circuits can be optimized for a wider range of operating conditions.

In yet another embodiment, the snubber circuit is disposed in parallel to each one of the two switching devices in each of the two legs of each of the two H-bridge circuits. In this third configuration, the snubber circuit is parallel to each of the two switching devices in each of the two legs of both H-bridge circuits. This third configuration provides the advantage of increased redundancy, as all switching devices within the H-bridge circuits are equipped with snubber circuits. This increased redundancy provided by snubber circuits across all switching devices enhances fault tolerance, ensuring more robust and stable operation under various conditions, ultimately contributing to the improved overall performance and longevity of the power converter system.

In still another embodiment, the snubber circuit is disposed across multiple switching devices or H-bridge circuits in the DAB power converter. Beneficially, the use of snubber circuits across multiple switching devices provides redundancy, enhancing fault tolerance and reliability.

Optionally, for each snubber circuit, the respective snubber capacitor has a capacitance *C_{cap}* and the respective snubber switch has a capacitance *C_{switch},* and the corresponding switching device has a capacitance *Cₜᵣₐₙₛ,* such that *C_{switch} < Cₜᵣₐₙₛ < C_{cap}.* It may be appreciated that, herein, a capacitance of a transistor refers to its charge-equivalent output capacitance. Now, having *C_{switch}* smaller than *Cₜᵣₐₙₛ* ensures that the snubber switch has a lower capacitance than the corresponding switching device, which limits the impact of the switched snubber on the ZVS capability of the switching leg whenever the snubber switch is OFF, and thus helps achieve ZVS at low load currents. Further, with *Cₜᵣₐₙₛ* being smaller than *C_{cap},* the snubber capacitor has a larger capacitance than the corresponding switching device, which helps reduce turn-off losses at high load currents while enabling ZVS capability at low load currents. By implementing this specific capacitance configuration, the power converter system can achieve improved efficiency, reduced energy waste, and enhanced reliability of the DAB power converter. Additionally, this configuration reduces stress on the switching devices, and thus lowering the risk of component failure in the power converter.

Thus, the present disclosure provides a novel DAB power converters comprising the dynamically controlled snubber circuit with the controller, and the aforementioned specific capacitance configuration. Herein, the combination of the dynamic snubber circuit, the controller, and the specific capacitance configuration provides a synergistic effect to solve the technical problem of trade-off between minimizing turn-off switching losses and achieving ZVS in DAB power converters under varying load conditions, in a non-obvious way. This ensures improving overall efficiency, reliability, and adaptability of DAB power converters. Notably, by reducing voltage stress on the switching devices, the snubber circuit limits the risk of overvoltage and parasitic transistor activation, which can lead to catastrophic failure, thus improving the longevity and robustness of the DAB power converter.

That said, in real-world scenarios, the ideal capacitance relationship described above may not always be achievable due to various factors, such as component availability or design constraints. In some cases, the snubber capacitance might not be significantly higher than the main switch capacitance. This situation can still provide some benefits in terms of transient voltage and current management during switching events, albeit with reduced effectiveness. The power converter's overall efficiency and reliability may be slightly compromised, but the inclusion of a snubber circuit will still offer better performance than without one. Additionally, the output capacitance of a semiconductor switch, such as a MOSFET, can be highly nonlinear. As the drain-source voltage (VDS) approaches zero, the capacitance may increase by a factor of 100 or more, becoming much larger than the snubber capacitance. However, even with this nonlinear behaviour, the presence of a snubber circuit can still help manage the transient voltages and currents during switching events, albeit with reduced efficiency compared to the ideal case.

As aforementioned, the power converter of the present disclosure also utilizes the controller configured to control switching of the snubber switch in each snubber circuit to minimize turn-off switching losses in the power converter while achieving ZVS. The term *"controller"* as used herein refers to a computational element that is coupled to the snubber circuit and is operable to minimize turn-off switching losses in the power converter. The controller dynamically activates or deactivates the snubber circuit depending on the operating conditions, such as the current through the switching device, to achieve: (i) minimization of turn-off switching losses by reducing the voltage stress and energy dissipation during the turn-off phase of the switching device; and (ii) achievement of ZVS by ensuring that the switching device turns on when the voltage across it is zero, thereby reducing turn-on losses. In this regard, the controller is configured to control the snubber switch based on the current through the corresponding switching device. Optionally, the controller ensures that the snubber circuit operates optimally in real-time, adapting to changes in load conditions and operating points. Beneficially, the dynamic control of the snubber circuit, via the snubber switch and the controller, allows the DAB power converter to adapt to different operating conditions, making it suitable for a wide range of applications, such as energy storage systems, electric vehicles, and smart grids.

Optionally, the controllers, include, but is not limited to, a microcontroller, a processor, a microprocessor, a complex instruction set computing (CISC) microprocessor, a reduced instruction set (RISC) microprocessor, a very long instruction word (VLIW) microprocessor, Field Programmable Gate Array (FPGA) or any other type of controlling circuit, for example as described. The controller may be communicably coupled to the snubber circuit through wired or wireless networks including, but not limited to, Bluetooth^{®}, Wireless Fidelity (Wi-Fi), Local Area Networks (LANs), Wireless LANs (WLANs), the Internet, second generation (2G) telecommunication networks, third generation (3G) telecommunication networks, fourth generation (4G) telecommunication networks, fifth generation (5G) telecommunication networks and Worldwide Interoperability for Microwave Access (WiMAx) networks.

Optionally, the controller is configured to: close (turn ON) the respective snubber switch when a current through the corresponding switching device at operation timescale is higher than a predefined threshold; and open (turn OFF) the respective snubber switch when a current through the corresponding switching device is lower than the predefined threshold, wherein the predefined threshold is based on a ZVS current for the corresponding switching device. That is, when the current through a switching device is higher than the predefined threshold, the controller is configured to close the corresponding snubber switch, thereby enabling the snubber capacitor to reduce turn-off losses. On the other hand, when the current through the switching device is lower than the predefined threshold, the controller is configured to open the corresponding snubber switch, thereby ensuring ZVS is achievable by minimizing the impact of the snubber circuit on the switching leg. In this regard, the controller is responsible for controlling the snubber circuit and ensuring that the snubber switch is activated at the appropriate times. Specifically, the controller is designed to detect when the current through the switching device reaches the predefined threshold, and then activate the corresponding snubber circuit. The predefined threshold used by the controller is based on a Zero Voltage Switching (ZVS) current for the corresponding switching device. By basing the predefined threshold on the ZVS current, the controller can ensure that the snubber circuits are activated at the optimal times, improving the performance and efficiency of the power converter. Moreover, the use of a predefined threshold based on the ZVS current simplifies the control logic, reducing the computational burden on the controller.

In implementation of the present disclosure, the snubber switch is designed to turn on or off only when necessary. The switching device in the circuit, on the other hand, switches on or off hundreds of thousands of times per second. The snubber switch has two states: ON, which corresponds to a high capacitance, and OFF, which corresponds to a low capacitance. The snubber switch changes state only when it is necessary. In the present power converter, the amount of current in the switching leg is constant. As a result, if the snubber switch needs to be ON during the first switching cycle, it must remain ON during subsequent cycles, unless the operating point changes. This means that it can be predetermined whether the snubber switch should be ON or OFF for each operating point and control target. Further, to turn the snubber switch ON or OFF, it may be needed to ensure that there is no current or voltage in the snubber switch. This is important because the snubber switch may possibly be a cheap IGBT which is generally not very effective at switching. Therefore, the snubber switch may only be "switched" when the transistor in parallel with the snubber switch is not switching (i.e., there is no current in the snubber switch) and it is conducting current (i.e., voltage in the snubber switch is 0V). This ensures that the snubber switch can be switched quickly and efficiently, without any adverse effects on the snubber circuit.

Optionally, each of the two or more switching devices is one of: Si MOSFET, SiC MOSFET, Superjunction MOSFET, Cascode transistor, GaN HEMT. Herein, since the DAB converter is a DC-DC converter, switching devices are rarely switched; and as a result, cheap "slow-switching" transistors can be used in the snubber circuit. Si MOSFET (Silicon MOSFET) have relatively low cost and known to be suitable for operation at lower frequencies (up to a few hundred kHz) and can handle voltages up to a few hundred volts. SiC MOSFET (Silicon Carbide MOSFET) are also well-suited for high-power and high-frequency applications, where low switching losses and high efficiency are crucial. Superjunction MOSFETs are commonly used in power converters for medium-power to high-power applications and can handle voltages up to several hundred volts and have lower on-resistance compared to Si MOSFETs, which results in lower conduction losses. Cascode transistors are commonly used in power converters for high-frequency applications, where low switching losses and high efficiency are important. GaN HEMT (Gallium Nitride High-Electron-Mobility Transistor) are well-suited for high-frequency and high-power applications, including the present power converter because of very low on-resistance and switching losses, which results in higher efficiency and lower heat dissipation.

The present disclosure also relates to the method for operating the power converter aforementioned above. Various embodiments and variants disclosed above apply *mutatis mutandis* to the method for operating the power converter.

Optionally, the method further comprises, with the power converter comprising two H-bridge circuits, with each of the two H-bridge circuits comprising two legs, and with each of the two legs comprising two switching devices, the method comprising disposing the snubber circuit in parallel to at least one of the two switching devices in each of the two legs of at least one of the two H-bridge circuits.

Optionally, for each snubber circuit, the respective snubber capacitor has a capacitance *C_{cap}* and the respective snubber switch has a capacitance *C_{switch},* and the corresponding switching device has a capacitance *Cₜᵣₐₙₛ,* such that *C_{switch} < Cₜᵣₐₙₛ < C_{cap}.*

Optionally, the method further comprises closing the respective snubber switch when a current though the corresponding switching device is higher than a predefined threshold; and opening the respective snubber switch when a current though the corresponding switching device is lower than the predefined threshold, wherein the predefined threshold is based on a ZVS current for the corresponding switching device.

### DETAILED DESCRIPTION OF THE DRAWINGS

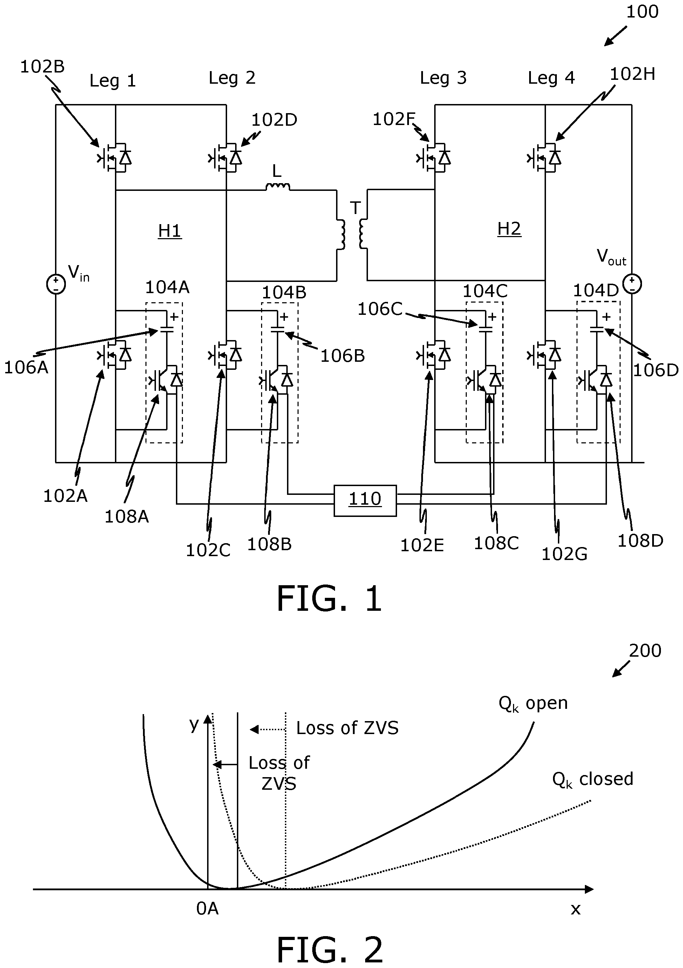

Referring to FIG. 1, there is shown an electric circuit diagram of a power converter **100,** in accordance with an embodiment of the present disclosure. As shown, the power converter **100** comprises four legs depicted as **Leg 1, Leg 2, Leg 3,** and **Leg 4.** Each leg of the power converter **100** comprises two or more switching devices **102A, 102B, 102C, 102D, 102E, 102F, 102G,** and **102H** (collectively referred to as **102A-H).** As shown, each leg of the power converter **100** comprises a snubber circuit **104A, 104B, 104C,** and **104D** (collectively referred as **104A-D** and marked as dashed rectangle) arranged in parallel at least one of the two or more switching devices, such as the snubber circuit **104A** is arranged in parallel to the switching device **102A.** Each of the snubber circuits **104A-D** comprises a snubber capacitor **106A, 106B, 106C,** and **106D** (collectively referred to as **106A-D)** and a snubber switch **108A, 108B, 108C,** and **108D** (collectively referred to as **108A-D)** disposed in series to the snubber capacitor **106A-D.** The power converter **100** further comprises a controller **110** configured to control the switching of the snubber switch **108A-D** in each snubber circuit **104A-D** to minimize turn-off switching losses in the power converter **100** while achieving Zero Voltage Switching (ZVS).

The power converter **100** comprises two H-bridge circuits **H1** and **H2,** connected through an isolation transformer **T** and a coupling inductor **L,** with each of the two H-bridge circuits (such as **H1)** comprising two legs (such as **Leg 1, Leg 3),** and with each of the two legs (such as **Leg 1)** comprising two switching devices **(102A, 102B),** wherein the snubber circuit **104A** is disposed of in parallel to at least one of the two switching devices **102A.** As shown, a voltage input **Vᵢₙ** is coupled with the **Leg 1** and **Leg 2,** and a voltage output **Vₒᵤₜ,** as a load, is coupled with the **Leg 3 and Leg 4.**

In operation, it may be assumed that initially the switching device **102C** is on and forward current flows through the switching device during the on-state. The snubber current, in the snubber circuit **104B,** is zero and the snubber capacitor **106B** is uncharged. Then, the switching device **102C** stops conducting, the snubber switch **108B** is conducting, and the other devices are not conducting. More specifically, when the snubber switch **108B** is closed, it starts conducting, and then it behaves like a wire and the equivalent circuit for the snubber circuit **104B** is a capacitor having a large capacitance *C_{cap}.* The turn-off time of the switching device **102C** is considered to be negligible, and the value of snubber capacitor **106B** is sufficiently high to ensure very little change in the voltage across the switching device **102C** during its turn-off time. Without the snubber capacitor **106B,** the voltage across the switching device **102C** would rapidly rise to **Vᵢₙ** with high dv/dt. The rapid rise of voltage may lead to an overvoltage in the switching device **102C.** The snubber circuit **104B** reduces this high dv/dt by conducting the switching device **102C** turn-off current. The upper switching devices in each leg, in FIG. 1, are switched so that there is phase difference of 180 degrees with the lower switching devices of the same leg. There is a short period, dead time, after a switching device in each leg turns off before the other switching device in the leg is turned on.

Optionally, in one embodiment, each of the snubber circuits **104A-104D** may comprise a snubber capacitor, a snubber resistor and a snubber switch that are connected in series. In yet another embodiment, each of the snubber circuits **104A-104D** may comprise a snubber capacitor in series with a circuit having a snubber resistor and a snubber diode in parallel, and that are further arranged in series with a snubber switch.

Referring to FIG. 2, there is shown a graph **200** depicting relation between the switching loss and current in a leg (such as, **Leg 1, Leg 2, Leg 3, Leg 4)** of the power converter (such as, the power converter **100),** in accordance with an embodiment of the present disclosure. Herein, horizontal axis (depicted by **x)** of the graph **200** represents the current in the leg and vertical axis (depicted by **y)** of the graph **200** represents the switching loss corresponding to the leg. As shown, with the snubber circuit (such as, the snubber circuit **104A-D),** the switching losses can be reduced, particularly at high currents. When the current is high, the snubber switch (such as, the snubber switch **108A-D)** is closed, and the snubber capacitor (such as, the snubber capacitor **106A-D)** discharges into the load (such as, the voltage output **Vₒᵤₜ),** providing a low-impedance path for the energy stored in the parasitic capacitances. This reduces the voltage spike and minimizes turn-off switching losses. Conversely, when the current is low, the snubber switch is open, and the snubber circuit behaves like a small capacitor, which can be neglected in the overall circuit analysis. This reduces the impact of the snubber circuit on the switching losses.

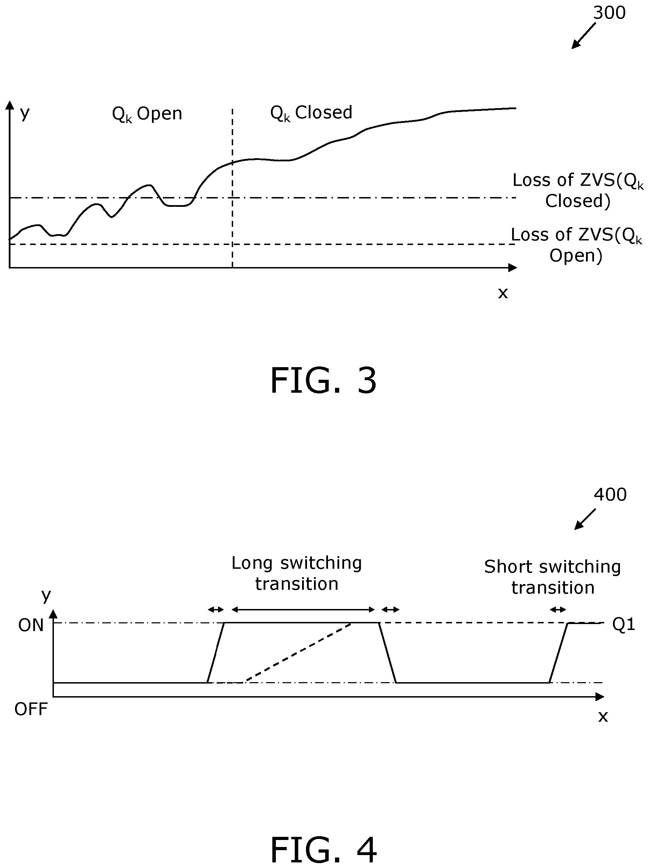

Referring to FIG. 3, there is shown a graph **300** depicting a controlled trajectory path in the power converter (such as, the power converter **100),** in accordance with an embodiment of the present disclosure. Herein, horizontal axis (depicted by **x)** of the graph **300** represents load power and vertical axis (depicted by **y)** of the graph **300** represents the current in leg. Herein, the controlled trajectory path shows the optimal values of current in the leg for a given load power, taking into account the characteristics of the snubber circuit and the switching device. When the load power is low, the current in the leg can be kept low to achieve ZVS without the need for the snubber circuit. As the load power increases, the current in the leg also increases, and the snubber circuit can be activated to achieve ZVS and minimize switching losses.

Referring to FIG. 4, there is shown a graph **400** depicting transistor switching states in the power converter (such as, the power converter **100),** in accordance with an embodiment of the present disclosure. Herein, horizontal axis (depicted by **x)** of the graph **400** represents time and vertical axis (depicted by **y)** of the graph **400** represents the transistor state. As shown, the graph **400** shows two types of switching transitions: long switching transitions and short switching transitions. Long switching transitions occur when the current in the leg is high and the snubber circuit is activated. During a long switching transition, the snubber switch is closed, and the snubber capacitor discharges into the load, providing a low-impedance path for the energy stored in the parasitic capacitances. Short switching transitions occur when the current in the leg is low and the snubber circuit is not activated. During a short switching transition, the snubber switch is open, and the snubber circuit behaves like a small capacitor.

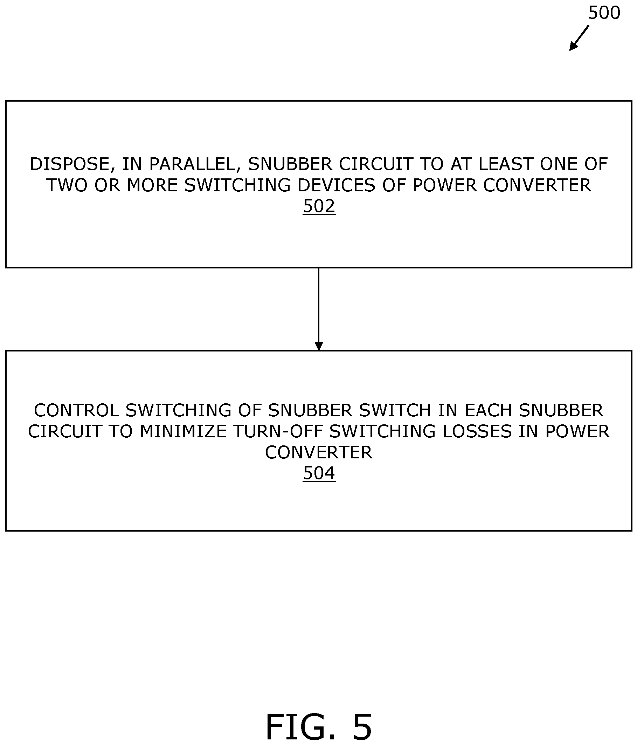

Referring to FIG. 5, there is shown a flowchart of a method **500** lusting steps for operating a power converter, in accordance with an embodiment of the present disclosure. At step, **502** a snubber circuit to is disposed, in parallel to at least one of two or more switching devices of the power converter, the snubber circuit comprising a snubber capacitor and a snubber switch disposed in series to the snubber capacitor. At step, **504** switching of the snubber switch in each snubber circuit is controlled to minimize turn-off switching losses in the power converter while achieving Zero Voltage Switching (ZVS). The steps **502** and **504** are only illustrative and other alternatives can also be provided where one or more steps are added, one or more steps are removed, or one or more steps are provided in a different sequence without departing from the scope of the claims herein.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A Dual-Active-Bridge (DAB) power converter (100) comprising:
- two or more switching devices (102A-H);
- a snubber circuit (104A-D) disposed in parallel to at least one of the two or more switching devices, the snubber circuit comprising:
- a snubber capacitor (106A-D); and
- a snubber switch (108A-D) disposed in series to the snubber capacitor; and
- a controller (110) configured to control switching of the snubber switch in each snubber circuit to minimize turn-off switching losses in the DAB power converter while achieving Zero Voltage Switching (ZVS).

2. A DAB power converter (100) according to claim 1, comprising two H-bridge circuits (H1, H2), with each of the two H-bridge circuits comprising two legs, and with each of the two legs comprising two switching devices (102A-H), wherein the snubber circuit (104A-D) is disposed in parallel to at least one of the two switching devices in each of the two legs of at least one of the two H-bridge circuits.

3. A DAB power converter (100) according to claim 2, wherein the snubber circuit (104A-D) is disposed in parallel to each one of the two switching devices (102A-H) in each of the two legs of at least one of the two H-bridge circuits (H1, H2).

4. A DAB power converter (100) according to claim 2, wherein the snubber circuit (104A-D) is disposed in parallel to each one of the two switching devices (102A-H) in each of the two legs of each of the two H-bridge circuits (H1, H2).

5. A DAB power converter (100) according to any one of preceding claims, wherein for each snubber circuit (104A-D), the respective snubber capacitor (106A-D) has a capacitance *C_{cap}* and the respective snubber switch has a capacitance *C_{switch},* and the corresponding switching device has a capacitance *Cₜᵣₐₙₛ,* such that *C_{switch} < Cₜᵣₐₙₛ < C_{cap}.*

6. A DAB power converter (100) according to any one of preceding claims, wherein the controller (110) is configured to:
- close the respective snubber switch (108A-D) when a current through the corresponding switching device (102A-H) is higher than a predefined threshold; and
- open the respective snubber switch when a current though the corresponding switching device is lower than the predefined threshold,
- wherein the predefined threshold is based on a ZVS current for the corresponding switching device.

7. A DAB power converter (100) according to any one of preceding claims, wherein the snubber capacitor (106A-D) is a capacitor bank comprising two or more capacitor disposed in parallel to each other.

8. A DAB power converter (100) according to any one of preceding claims, wherein each of the two or more switching devices (102A-H) is one of: Si MOSFET, SiC MOSFET, Superjunction MOSFET, Cascode transistor, GaN HEMT.

9. A DAB power converter (100) according to any one of preceding claims, wherein the snubber switch (108A-D) is one of: MOSFET, GaN HEMT, IGBT.

10. A DAB power converter (100) according to any one of preceding claims, wherein the snubber capacitor (106A-D) is one of: ceramic capacitor, Mica capacitor, film capacitor.

11. A method (500) for operating a Dual-Active-Bridge (DAB) power converter (100), the method comprising:
- disposing, in parallel, a snubber circuit (104A-D) to at least one of two or more switching devices (102A-H) of the DAB power converter, the snubber circuit comprising a snubber capacitor (106A-D) and a snubber switch (108A-D) disposed in series to the snubber capacitor; and
- controlling switching of the snubber switch in each snubber circuit to minimize turn-off switching losses in the DAB power converter while achieving Zero Voltage Switching (ZVS).

12. A method (500) according to claim 11, with the DAB power converter (100) comprising two H-bridge circuits (H1, H2), with each of the two H-bridge circuits comprising two legs, and with each of the two legs comprising two switching devices (102A-H), the method comprising disposing the snubber circuit (104A-D) in parallel to at least one of the two switching devices in each of the two legs of at least one of the two H-bridge circuits.

13. A method (500) according to any one of claims 11 to 12, wherein for each snubber circuit (104A-D), the respective snubber capacitor (106A-D) has a capacitance *C_{cap}* and the respective snubber switch (108A-D) has a capacitance *C_{switch},* and the corresponding switching device has a capacitance *Cₜᵣₐₙₛ,* such that *C_{switch} < Cₜᵣₐₙₛ < C_{cap}.*

14. A method (500) according to any one of claims 11 to 13 further comprising:
- closing the respective snubber switch (104A-D) when a current though the corresponding switching device (102A-H) is higher than a predefined threshold; and
- opening the respective snubber switch when a current though the corresponding switching device is lower than the predefined threshold,
- wherein the predefined threshold is based on a ZVS current for the corresponding switching device.
